# EUROPEAN PATENT APPLICATION

(11) **EP 4 571 530 A1**
(43) Date of publication of application: **18.06.2025**
(21) Application number: 23881618.5
(22) Date of filing: 08.10.2023
(51) Int. Cl.: G06F 16/332

(54) **MAN-MACHINE DIALOGUE METHOD, DIALOGUE NETWORK MODEL TRAINING METHOD AND APPARATUS**

(30) Priority: 28.10.2022 CN 202211335469
(71) Applicant: Huawei Technologies Co., Ltd., Shenzhen, Guangdong 518129 (CN)
(72) Inventor: LI, Yitong, Shenzhen, Guangdong 518129 (CN); MI, Fei, Shenzhen, Guangdong 518129 (CN); WANG, Yasheng, Shenzhen, Guangdong 518129 (CN); ZHUANG, Zhaoyong, Shenzhen, Guangdong 518129 (CN)
(74) Representative: MERH-IP Matias Erny Reichl Hoffmann Patentanwälte PartG mbB
(86) International application number: PCT/CN2023/123430
(87) International publication number: WO 2024/088039

(57) **Abstract**

Embodiments of the present disclosure provide a human-computer dialogue method, a dialogue network model training method, and an apparatus. The human-computer dialogue method includes: obtaining second historical dialogue data, current dialogue environment data, and second input dialogue data input by a user; determining a second semantic keyword based on the second historical dialogue data, the current dialogue environment data, and the second input dialogue data; and generating and outputting, based on the second semantic keyword and a preset-type knowledge base, second feedback dialogue data corresponding to the second input dialogue data, where the preset-type knowledge base includes: a knowledge graph, text knowledge, and external knowledge other than the knowledge graph and the text knowledge. This can avoid ambiguity and semantic fuzziness of the second feedback dialogue data due to a lack of key knowledge, improve reliability and validity of the second feedback dialogue data, and improve interaction experience of the user.

## Description

This application claims priority to Chinese Patent Application No. 202211335469.1, filed with the China National Intellectual Property Administration on October 28, 2022 and entitled "HUMAN-COMPUTER DIALOGUE METHOD, DIALOGUE NETWORK MODEL TRAINING METHOD, AND APPARATUS", which is incorporated herein by reference in its entirety.

### TECHNICAL FIELD

The present disclosure relates to the field of artificial intelligence technologies, and in particular, to a human-computer dialogue method, a dialogue network model training method, and an apparatus.

### BACKGROUND

A dialogue system is one of important technologies in artificial intelligence. The dialogue system is a computer system designed to assist humans and complete natural, coherent, and smooth communication tasks with humans. For example, a human-computer dialogue may be completed based on the dialogue system.

In some embodiments, the dialogue system may collect user dialogue data initiated by a user, determine feedback dialogue data for the user dialogue data from a preset-type knowledge base, and output the feedback dialogue data. The preset-type knowledge base includes text knowledge and a knowledge graph.

However, update of the text knowledge and knowledge in the knowledge graph is slow, and consequently the determined feedback dialogue data may be ambiguous or unclear.

### SUMMARY

To improve reliability and validity of a human-computer dialogue, embodiments of the present disclosure provide a human-computer dialogue method, a dialogue network model training method, and an apparatus.

According to an aspect of embodiments of the present disclosure, an embodiment of the present disclosure provides a human-computer dialogue method. The method includes:
obtaining second historical dialogue data, current dialogue environment data, and second input dialogue data input by a user;
determining a second semantic keyword based on the second historical dialogue data, the current dialogue environment data, and the second input dialogue data; and
generating and outputting, based on the second semantic keyword and a preset-type knowledge base, second feedback dialogue data corresponding to the second input dialogue data, where the preset-type knowledge base includes a knowledge graph, text knowledge, and external knowledge other than the knowledge graph and the text knowledge.

In this embodiment, the second semantic keyword is determined in combination of the current dialogue environment data, so that the second semantic keyword can indicate content in more dimensions, and a rich indication capability of the second semantic keyword is improved. In addition, the second feedback dialogue data is determined by introducing the external knowledge, so that the second feedback dialogue data is determined from more types of knowledge. This can avoid ambiguity and semantic fuzziness of the second feedback dialogue data due to a lack of key knowledge, thereby improving reliability and validity of the second feedback dialogue data, and improving interaction experience of the user.

In some embodiments, the generating and outputting, based on the second semantic keyword and a preset-type knowledge base, second feedback dialogue data corresponding to the second input dialogue data includes:
separately obtaining, from the external knowledge, the knowledge graph, and the text knowledge, knowledge corresponding to the second semantic keyword; and
generating and outputting the second feedback dialogue data based on the obtained knowledge corresponding to the second semantic keyword.

In this embodiment, the knowledge corresponding to the second semantic keyword is separately obtained from various types of knowledge (namely, the external knowledge, the knowledge graph, and the text knowledge), so that the obtained knowledge is rich and comprehensive. In this way, when the second feedback dialogue data is determined based on the rich and comprehensive knowledge, the second feedback dialogue data has high reliability and validity.

In some embodiments, after the separately obtaining, from the external knowledge, the knowledge graph, and the text knowledge, knowledge corresponding to the second semantic keyword, the method further includes:
retrieving, from at least one of other types of knowledge based on knowledge that is obtained from first-type knowledge and that corresponds to the second semantic keyword, knowledge associated with the knowledge that is obtained from the first-type knowledge and that corresponds to the second semantic keyword, where
the knowledge that is in the at least one of other types of knowledge and that corresponds to the second semantic keyword includes the retrieved knowledge associated with the knowledge that is obtained from the first-type knowledge and that corresponds to the second semantic keyword; the first-type knowledge is any one of the external knowledge, the knowledge graph, and the text knowledge; and the at least one of other types of knowledge is type knowledge other than the first-type knowledge in the external knowledge, the knowledge graph, and the text knowledge.

In this embodiment, associated knowledge is obtained from different types of knowledge in a "multi-hop retrieval" manner, to avoid knowledge omission, and implement cross retrieval in different types of knowledge. This improves diversity and adequacy of the knowledge corresponding to the second semantic keyword.

In some embodiments, the generating and outputting the second feedback dialogue data based on the obtained knowledge corresponding to the second semantic keyword includes:
separately encoding the obtained knowledge corresponding to the second semantic keyword, to obtain corresponding target feature vectors; and
generating and outputting the second feedback dialogue data based on the corresponding target feature vectors.

In some embodiments, the generating and outputting the second feedback dialogue data based on the corresponding target feature vectors includes:
fusing the corresponding target feature vectors to obtain a target fusion feature vector; and
generating and outputting the second feedback dialogue data based on the target fusion feature vector.

In this embodiment, the target feature vectors are fused, so that the target fusion feature vector can indicate a feature corresponding to each target feature vector. In this way, when the second feedback dialogue data is determined based on the target fusion feature vector, the second feedback dialogue data has high reliability and validity.

In some embodiments, the target fusion feature vector is obtained by inputting the corresponding target feature vectors into a cross-attention network model obtained through pre-training.

In some embodiments, the generating and outputting the second feedback dialogue data based on the obtained knowledge corresponding to the second semantic keyword includes:
performing redundancy removal on the obtained knowledge corresponding to the second semantic keyword, to obtain knowledge after redundancy removal; and
generating and outputting the second feedback dialogue data based on the knowledge obtained after redundancy removal.

In this embodiment, data redundancy can be avoided through redundancy removal, a data processing amount can be reduced, and interaction efficiency can be improved.

In some embodiments, the method further includes:
determining, based on the second historical dialogue data, the current dialogue environment data, and the second input dialogue data, a third classification result indicating whether the external knowledge needs to be introduced; and
the generating and outputting, based on the second semantic keyword and a preset-type knowledge base, second feedback dialogue data corresponding to the second input dialogue data includes: if the third classification result indicates that the external knowledge needs to be introduced, generating and outputting, based on the second semantic keyword and the preset-type knowledge base, the second feedback dialogue data corresponding to the second input dialogue data.

In this embodiment, whether the external knowledge needs to be introduced is first determined, so that when the knowledge graph and the text knowledge cannot meet a dialogue requirement, the external knowledge is introduced, and the second feedback dialogue data is determined in combination of the external knowledge. In this way, the second feedback dialogue data can meet the dialogue requirement of the user. This improves interaction experience.

In some embodiments, the third classification result is obtained by inputting the second historical dialogue data, the current dialogue environment data, and the second input dialogue data into a pre-trained binary classification network model.

The binary classification network model is a model for learning, based on a third sample data set, a capability of determining whether the external knowledge needs to be introduced, and the third sample data set includes third sample input dialogue data, third sample historical dialogue data, and second sample dialogue environment data corresponding to the third sample input dialogue data.

In some embodiments, the second semantic keyword is obtained by inputting the second historical dialogue data, the current dialogue environment data, and the second input dialogue data into a pre-trained generative network model.

The generative network model is a model for learning, based on a fourth sample data set, a capability of a third sample semantic keyword corresponding to the fourth sample data set, and the fourth sample data set includes fourth sample input dialogue data, fourth sample historical dialogue data, and third sample dialogue environment data corresponding to the fourth sample input dialogue data.

In some embodiments, the external knowledge includes network knowledge and multi-modal knowledge, where the multi-modal knowledge is knowledge including a picture and a text.

In this embodiment, the second feedback dialogue data is determined in combination of external knowledge, so that it can be avoided that knowledge such as a hot event and a hot topic is not considered in the second feedback dialogue data because the text knowledge and the knowledge graph are not updated in time. This improves timeliness, validity, and reliability of the second feedback dialogue data.

According to another aspect of embodiments of the present disclosure, an embodiment of the present disclosure further provides a dialogue network model training method. The method includes:
obtaining a second sample data set, where the second sample data set includes second sample input dialogue data input by a user, second sample historical dialogue data, and first sample dialogue environment data corresponding to the second sample input dialogue data;
generating a second sample semantic keyword based on the second sample data set; and
obtaining, through training based on the second sample semantic keyword and a preset-type knowledge base, a dialogue network model that has a capability of predicting feedback dialogue data corresponding to input dialogue data, where the preset-type knowledge base includes a knowledge graph, text knowledge, and external knowledge other than the knowledge graph and the text knowledge.

In this embodiment, the second sample semantic keyword is determined in combination of the first sample dialogue environment data, so that the second sample semantic keyword can indicate content in more dimensions. This improves a rich indication capability of the second sample semantic keyword. In addition, the dialogue network model is obtained through training by introducing the external knowledge, so that the dialogue network model is obtained from more types of knowledge through training. This improves reliability and validity of the dialogue network model, and improves interaction experience of the user.

In some embodiments, the obtaining, through training based on the second sample semantic keyword and a preset-type knowledge base, a dialogue network model that has a capability of predicting feedback dialogue data corresponding to input dialogue data includes:
separately obtaining, from the external knowledge, the knowledge graph, and the text knowledge, knowledge corresponding to the second sample semantic keyword; and
obtaining the dialogue network model through training based on the obtained knowledge corresponding to the second sample semantic keyword.

In this embodiment, the knowledge corresponding to the second sample semantic keyword is separately obtained from various types of knowledge (namely, the external knowledge, the knowledge graph, and the text knowledge), so that the obtained knowledge is rich and comprehensive. In this way, when the dialogue network model is obtained through training based on the rich and comprehensive knowledge, the dialogue network model has high reliability and validity.

In some embodiments, after the separately obtaining, from the external knowledge, the knowledge graph, and the text knowledge, knowledge corresponding to the second sample semantic keyword, the method further includes:
retrieving, from at least one of other types of knowledge based on knowledge that is obtained from first-type knowledge and that corresponds to the second sample semantic keyword, knowledge associated with the knowledge that is obtained from the first-type knowledge and that corresponds to the second sample semantic keyword, where
the knowledge that is in the at least one of other types of knowledge and that corresponds to the second sample semantic keyword includes the retrieved knowledge associated with the knowledge that is obtained from the first-type knowledge and that corresponds to the second sample semantic keyword; the first-type knowledge is any one of the external knowledge, the knowledge graph, and the text knowledge; and the at least one of other types of knowledge is type knowledge other than the first-type knowledge in the external knowledge, the knowledge graph, and the text knowledge.

In this embodiment, associated knowledge is obtained from different types of knowledge in a "multi-hop retrieval" manner, to avoid knowledge omission, and implement cross retrieval in different types of knowledge. This improves diversity and adequacy of the knowledge corresponding to the second sample semantic keyword.

In some embodiments, the obtaining the dialogue network model through training based on the obtained knowledge corresponding to the second sample semantic keyword includes:
separately encoding the obtained knowledge corresponding to the second sample semantic keyword, to obtain corresponding feature vectors; and
obtaining the dialogue network model through training based on the corresponding feature vectors.

In some embodiments, the obtaining the dialogue network model through training based on the corresponding feature vectors includes:
fusing the corresponding feature vectors to obtain a fusion feature vector; and
inputting the fusion feature vector into a fourth neural network model, to output second predicted dialogue data fed back to the user; and
adjusting a parameter of the fourth neural network model based on the second predicted dialogue data fed back to the user and second pre-annotated dialogue data fed back to the user, to obtain the dialogue network model.

In this embodiment, the feature vectors are fused, so that the fusion feature vector can indicate a feature corresponding to each feature vector. This improves reliability and validity of the dialogue network model obtained through training based on the fusion feature vector.

In some embodiments, the fusion feature vector is obtained by inputting the corresponding feature vectors into a cross-attention network model obtained through pre-training.

In some embodiments, the obtaining the dialogue network model through training based on the obtained knowledge corresponding to the second sample semantic keyword includes:
performing redundancy removal on the obtained knowledge corresponding to the second sample semantic keyword, to obtain knowledge after redundancy removal; and
obtaining the dialogue network model through training based on the knowledge obtained after redundancy removal.

In this embodiment, data redundancy can be avoided through redundancy removal, a data processing amount can be reduced, and training efficiency can be improved.

In some embodiments, the method further includes:
determining, based on the second sample data set, a first classification result indicating whether the external knowledge needs to be introduced; and
the obtaining, through training based on the second sample semantic keyword and a preset-type knowledge base, a dialogue network model that has a capability of predicting feedback dialogue data corresponding to input dialogue data includes: if the first classification result indicates that the external knowledge needs to be introduced, obtaining the dialogue network model through training based on the second sample semantic keyword and the preset-type knowledge base.

In this embodiment, whether the external knowledge needs to be introduced is first determined, so that when the knowledge graph and the text knowledge cannot meet a training requirement, the external knowledge is introduced, and the dialogue network model is determined and obtained through training in combination of the external knowledge. In this way, the dialogue network model can meet the dialogue requirement of the user. This improves interaction experience during human-computer interaction.

In some embodiments, the first classification result is obtained by inputting the second sample data set into a pre-trained binary classification network model.

The binary classification network model is a model for learning, based on a third sample data set, a capability of determining whether the external knowledge needs to be introduced, and the third sample data set includes third sample input dialogue data, third sample historical dialogue data, and second sample dialogue environment data corresponding to the third sample input dialogue data.

In some embodiments, the second sample semantic keyword is obtained by inputting the second sample data set into a pre-trained generative network model.

The generative network model is a model for learning, based on a fourth sample data set, a capability of a third sample semantic keyword corresponding to the fourth sample data set, and the fourth sample data set includes fourth sample input dialogue data, fourth sample historical dialogue data, and third sample dialogue environment data corresponding to the fourth sample input dialogue data.

According to another aspect of embodiments of the present disclosure, an embodiment of the present disclosure further provides a human-computer dialogue apparatus. The apparatus includes:
a first obtaining unit, configured to obtain second historical dialogue data, current dialogue environment data, and second input dialogue data input by a user;
a first determining unit, configured to determine a second semantic keyword based on the second historical dialogue data, the current dialogue environment data, and the second input dialogue data;
a first generation unit, configured to generate, based on the second semantic keyword and a preset-type knowledge base, second feedback dialogue data corresponding to the second input dialogue data, where the preset-type knowledge base includes a knowledge graph, text knowledge, and external knowledge other than the knowledge graph and the text knowledge; and
an output unit, configured to output the second feedback dialogue data.

According to another aspect of embodiments of the present disclosure, an embodiment of the present disclosure further provides a dialogue network model training apparatus. The apparatus includes:
a second obtaining unit, configured to obtain a second sample data set, where the second sample data set includes second sample input dialogue data input by a user, second sample historical dialogue data, and first sample dialogue environment data corresponding to the second sample input dialogue data;
a second generation unit, configured to generate a second sample semantic keyword based on the second sample data set; and
a training unit, configured to obtain, through training based on the second sample semantic keyword and a preset-type knowledge base, a dialogue network model that has a capability of predicting feedback dialogue data corresponding to input dialogue data, where the preset-type knowledge base includes a knowledge graph, text knowledge, and external knowledge other than the knowledge graph and the text knowledge.

According to another aspect of embodiments of the present disclosure, an embodiment of the present disclosure further provides a computer storage medium, where the computer storage medium stores computer instructions. When the computer instructions are run by a processor, the human-computer interaction method according to any one of the foregoing embodiments is performed, or the dialogue network model training method according to any one of the foregoing embodiments is performed.

According to another aspect of embodiments of the present disclosure, an embodiment of the present disclosure further provides an electronic device, including:
at least one processor; and
a memory in communication connection with the at least one processor, where
the memory stores computer instructions that can be executed by the at least one processor, and the computer instructions are executed by the at least one processor, so that the human-computer interaction method according to any one of the foregoing embodiments is performed, or the dialogue network model training method according to any one of the foregoing embodiments is performed.

According to another aspect of embodiments of the present disclosure, an embodiment of the present disclosure further provides a computer program product. When the computer program product runs on a processor, the human-computer interaction method according to any one of the foregoing embodiments is performed, or the dialogue network model training method according to any one of the foregoing embodiments is performed.

According to another aspect of embodiments of the present disclosure, an embodiment of the present disclosure further provides a chip, including:
an input interface, configured to obtain second historical dialogue data, current dialogue environment data, and second input dialogue data input by a user;
a logic circuit, configured to perform the human-computer interaction method according to any one of the foregoing embodiments, to obtain second feedback dialogue data corresponding to the second input dialogue data; and
an output interface, configured to output the second feedback dialogue data.

According to another aspect of embodiments of the present disclosure, an embodiment of the present disclosure further provides a chip, including:
an input interface, configured to obtain a second sample data set, where the second sample data set includes second sample input dialogue data input by a user, second sample historical dialogue data, and first sample dialogue environment data corresponding to the second sample input dialogue data;
a logic circuit, configured to perform the dialogue network model training method according to any one of the foregoing embodiments, to obtain a dialogue network model that has a capability of predicting feedback dialogue data corresponding to input dialogue data; and
an output interface, configured to output the dialogue network model.

According to another aspect of embodiments of the present disclosure, an embodiment of the present disclosure further provides a terminal device, including:
a data collection apparatus, configured to obtain second historical dialogue data, current dialogue environment data, and second input dialogue data input by a user; and
a dialogue system, configured to: determine a second semantic keyword based on the second historical dialogue data, the current dialogue environment data, and the second input dialogue data; and generate and output, based on the second semantic keyword and a preset-type knowledge base, second feedback dialogue data corresponding to the second input dialogue data, where the preset-type knowledge base includes a knowledge graph, text knowledge, and external knowledge other than the knowledge graph and the text knowledge.

### BRIEF DESCRIPTION OF DRAWINGS

FIG. 1 is a diagram of a dialogue network model training method according to an embodiment of the present disclosure;
FIG. 2 is a diagram of a human-computer dialogue method according to an embodiment of the present disclosure;
FIG. 3 is a principle diagram of a dialogue network model training method according to an embodiment of the present disclosure;
FIG. 4 is a diagram of a dialogue network model training method according to another embodiment of the present disclosure;
FIG. 5 is a diagram of a human-computer dialogue method according to another embodiment of the present disclosure;
FIG. 6 is a diagram of a human-computer dialogue method according to another embodiment of the present disclosure;
FIG. 7 is a principle diagram of a dialogue network model training method according to another embodiment of the present disclosure;
FIG. 8 is a diagram 1 of a scenario of a human-computer dialogue method according to an embodiment of the present disclosure;
FIG. 9 is a diagram 2 of a scenario of a human-computer dialogue method according to an embodiment of the present disclosure;
FIG. 10 is a diagram of a human-computer dialogue apparatus according to an embodiment of the present disclosure;
FIG. 11 is a diagram of a human-computer dialogue apparatus according to another embodiment of the present disclosure;
FIG. 12 is a diagram of a dialogue network model training apparatus according to an embodiment of the present disclosure;
FIG. 13 is a diagram of a dialogue network model training apparatus according to another embodiment of the present disclosure; and
FIG. 14 is a diagram of an electronic device according to an embodiment of the present disclosure.

### DESCRIPTION OF EMBODIMENTS

Example embodiments are described in detail herein, and examples of the example embodiments are presented in the accompanying drawings. When the following descriptions relate to the accompanying drawings, unless specified otherwise, same numbers in different accompanying drawings represent same or similar elements. Implementations described in the following example embodiments do not represent all implementations consistent with the present disclosure. On the contrary, the implementations are only examples of apparatuses and methods that are described in the appended claims in detail and that are consistent with some aspects of the present disclosure.

Artificial intelligence (Artificial Intelligence, AI) is technical science that studies and develops theories, methods, techniques, and application systems for simulating, extending, and expanding human intelligence. A dialogue system is one of important technologies in artificial intelligence. The dialogue system is a computer system designed to assist humans and complete natural, coherent, and smooth communication tasks with humans.

For example, based on different dialogue requirements, the dialogue system may be classified into different types of dialogue systems, such as a question answering (Question Answering, QA) dialogue system, a task-oriented (Task-Oriented) dialogue system, and an open-domain (Open-domain) dialogue system.

The question answering dialogue system may be applied to a scenario of answering a question raised by a user, for example, customer service voice response of an e-commerce store or customer service voice response of a bank. Correspondingly, an implementation principle of the question answering dialogue system is as follows: in response to receiving dialogue data input by the user, where the dialogue data includes the question raised by the user, performing retrieval and matching in a pre-constructed knowledge base based on the dialogue data, to obtain, from the knowledge base, a feedback message used to reply to the question raised by the user, and output the feedback message.

The knowledge base may be a structured knowledge base, an unstructured knowledge base, or a semi-structured knowledge base. The structured knowledge base may be understood as a knowledge base of knowledge managed in a form of relational knowledge base table, the unstructured knowledge base may be understood as a knowledge base of knowledge without a fixed pattern, and the semi-structured knowledge base may be understood as a knowledge base of knowledge with a non-relational pattern and a basic fixed structure pattern. That is, the knowledge base includes knowledge, and knowledge in different types of knowledge bases may exist in different manners.

For example, the structured knowledge base may include a knowledge graph, or may include a table. The unstructured knowledge base may include a free document. The semi-structured knowledge base may include a question and answer pair (QA pair).

The task-oriented dialogue system may be applied to a scenario of completing a task corresponding to dialogue data based on the dialogue data input by a user, for example, a ticket booking scenario or a navigation scenario. Correspondingly, an implementation principle of the task-oriented dialogue system is as follows: In response to receiving the dialogue data input by the user, determining a user intent corresponding to the dialogue data, and executing a task corresponding to the user intent.

The task-oriented dialogue system includes two types of technical architectures: a pipeline (pipeline) technical architecture and an end-to-end (End-to-End) technical architecture. The task-oriented dialogue system of the pipeline technical architecture mainly includes six modules: an automatic speech recognition (Automatic Speech Recognition, ASR) module, a natural language understanding (Natural Language Understanding, NLU) module, a dialogue state tracking (Dialogue State Tracking, DST) module, a policy learning (Policy Learning, PL) module, a natural language generation (Natural Language Generation, NLG) module, and a text to speech (Text To Speech, TTS) module. The DST and PL are collectively referred to as a dialogue manager (Dialogue Manager, DM). The task-oriented dialogue system of the end-to-end technical architecture is an end-to-end task-oriented dialogue system formed by using a deep learning neural network.

The open-domain dialogue system may be implemented in two modes: a retrieval mode and a generative mode. The retrieval-mode open-domain dialogue system is similar to the question answering dialogue system, and details are not described herein again. The generative open-domain dialogue system may map, based on a pre-trained sequence-to-sequence (Sequence-to-Sequence) model, dialogue data input by a user to a reply sequence used to reply to the dialogue data, to determine, based on the reply sequence, a feedback message used to reply to a question raised by a user, and output the feedback message.

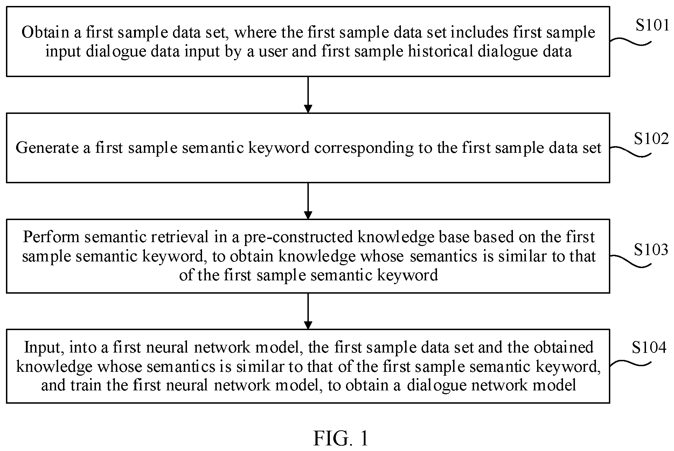

In some embodiments, the dialogue system may be implemented based on a neural network model. For example, in a training phase, the neural network model may be trained, so that the neural network model learns a capability of replying to the dialogue data input by the user, to obtain a dialogue network model used to reply to the dialogue data input by the user. Correspondingly, in an application phase (namely, a dialogue phase), an input of the dialogue network model is the dialogue data input by the user, and an output is the feedback message used to reply to the dialogue data. With reference to FIG. 1, a training principle of the dialogue network model is described below by using an example.

S101: Obtain a first sample data set, where the first sample data set includes first sample input dialogue data input by a user and first sample historical dialogue data.

The neural network model may be trained on a cloud, or may be trained locally. This is not limited in embodiments. If the dialogue network model is trained on the cloud, an execution body may be a server, a server cluster, or the like deployed on the cloud. If the dialogue network model is trained locally, an execution body may be any one of a server, a server cluster, a processor, a chip, and the like deployed locally.

An amount of data in the first sample data set is not limited in embodiments, and may be determined based on a requirement, a historical record, an experiment, or the like. For example, for a scenario with a high precision requirement, there may be a large amount of data in the first sample data set. On the contrary, for a scenario with a low precision requirement, there may be a small amount of data in the first sample data set.

The first sample input dialogue data may be understood as dialogue data (for example, an audio) input by the user to the dialogue system in a historical dialogue between the user and the dialogue system. The first sample historical dialogue data may be understood as data (for example, an audio) with which the dialogue system replies to dialogue data input by the user to the dialogue system in the historical dialogue between the user and the dialogue system.

S102: Generate a first sample semantic keyword corresponding to the first sample data set.

For example, the first sample semantic keyword may be understood as that the first sample input dialogue data is understood through natural language understanding (for example, natural language understanding in the task-oriented dialogue system in the foregoing example), to obtain an intent of performing dialogue between the user and the dialogue system.

The first sample semantic keyword may be a word, or may be a sentence. This is not limited in embodiments.

S103: Perform semantic retrieval in a pre-constructed knowledge base based on the first sample semantic keyword, to obtain knowledge whose semantics is similar to that of the first sample semantic keyword.

The knowledge base may include text knowledge and/or a knowledge graph.

For example, the knowledge base includes the knowledge graph. This step may be understood as follows: retrieving, from the knowledge graph in a semantic similarity matching manner, knowledge with a high semantic similarity to the first sample semantic keyword.

For example, the knowledge base includes the text knowledge. This step may be understood as follows: retrieving, from the text knowledge in a semantic similarity matching manner, knowledge with a high semantic similarity to the first sample semantic keyword.

For example, the knowledge base includes the knowledge graph and the text knowledge. This step may be understood as follows: retrieving, from the knowledge graph in a semantic similarity matching manner, knowledge with a high semantic similarity to the first sample semantic keyword, and retrieving, from the text knowledge in a semantic similarity matching manner, knowledge with a high semantic similarity to the first sample semantic keyword.

A semantic similarity calculation method may include: performing vectorization processing on the first sample semantic keyword and each piece of knowledge in the knowledge base, to obtain a first vector corresponding to the first sample semantic keyword and a second vector corresponding to each piece of knowledge in the knowledge base, and calculating a cosine distance between the first vector and the second vector, to obtain a corresponding first semantic similarity between the first sample semantic keyword and each piece of knowledge in the knowledge base.

Correspondingly, a first similarity threshold may be set. If the first semantic similarity between a piece of knowledge in the knowledge base and the first sample semantic keyword reaches (that is, is greater than or equal to) the first similarity threshold, the piece of knowledge in the knowledge base is the knowledge whose semantics is similar to that of the first sample semantic keyword. On the contrary, if the first semantic similarity between a piece of knowledge in the knowledge base and the first sample semantic keyword does not reach (that is, is less than) the first similarity threshold, the knowledge in the knowledge base is not the knowledge whose semantics is similar to that of the first sample semantic keyword.

S104: Input, into a first neural network model, the first sample data set and the obtained knowledge whose semantics is similar to that of the first sample semantic keyword, and train the first neural network model to obtain the dialogue network model.

The first neural network model may be understood as an initialized neural network model before training, and the dialogue network model may be understood as a neural network model that is obtained through training and that may be used to predict the dialogue data that is replied to the user. A type, a framework, a parameter, and the like of the first neural network model are not limited in embodiments.

Because the first sample data set includes the first sample input dialogue data and the first sample historical dialogue data, an input of the first neural network model includes content in three dimensions: the first sample input dialogue data, the first sample historical dialogue data, and the obtained knowledge whose semantics is similar to that of the first sample semantic keyword.

For example, S104 may include: inputting, into the first neural network model, the first sample input dialogue data, the first sample historical dialogue data, and the obtained knowledge whose semantics is similar to that of the first sample semantic keyword, to obtain first predicted dialogue data fed back to the user; calculating a first loss value between the first predicted dialogue data fed back to the user and first pre-annotated dialogue data fed back to the user; adjusting the parameter of the first neural network model based on the first loss value; and the rest can be deduced by analogy, until a first quantity of iterations reaches a first preset quantity threshold, or the first loss value is less than or equal to a first preset loss threshold, to obtain the dialogue network model.

Similarly, the first preset quantity threshold and the first preset loss threshold may be determined based on a requirement, a historical record, an experiment, or the like. This is not limited in embodiments.

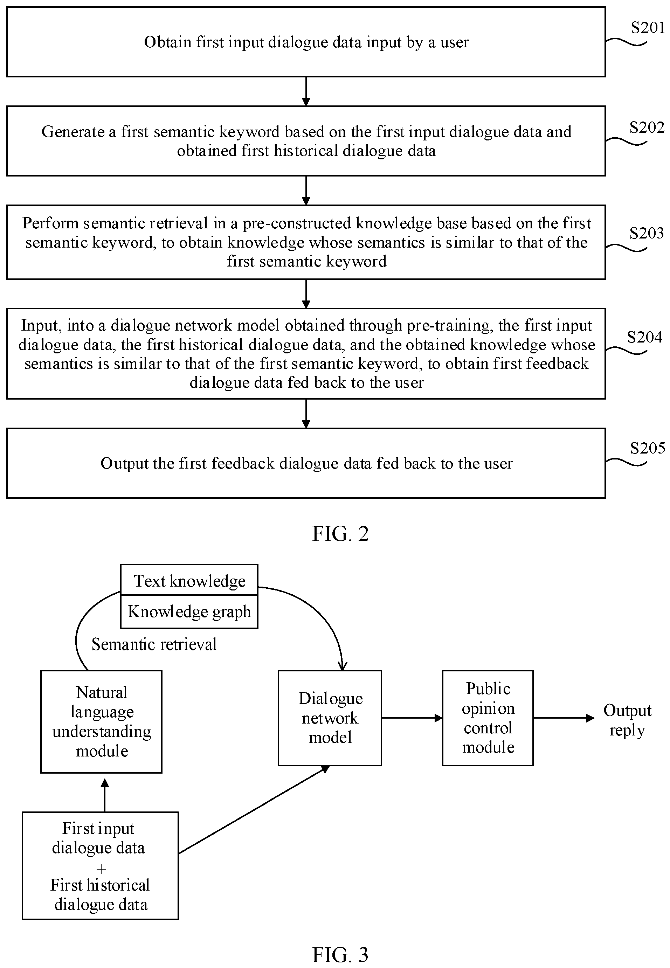

S101 to S104 describe how to obtain the dialogue model through training in a training phase. Application of the dialogue model is described below by using an example with reference to FIG. 2.

S201: Obtain first input dialogue data input by a user.

It can be learned from the foregoing analysis that the dialogue network model may be obtained through training on the cloud, or the dialogue network model may be obtained through local training. Correspondingly, the application of the dialogue network model may be implemented on the cloud, or may be implemented locally. However, due to a real-time requirement, an efficient feedback requirement, and the like of a dialogue, the application of the dialogue network model is usually implemented locally.

To facilitate differentiation between an execution body of the dialogue network model obtained through training and an execution body using the dialogue network model, the execution body of the dialogue network model obtained through training may be referred to as a training apparatus, and the execution body using the dialogue network model may be referred to as an application apparatus. The training apparatus and the application apparatus may be a same apparatus, or may be different apparatuses. This is not limited in embodiments.

In some embodiments, if the training apparatus is an apparatus deployed on the cloud, and the application apparatus is an apparatus deployed locally, the training apparatus may establish a communication link to the application apparatus. After obtaining the dialogue network model through training, the training apparatus may send the dialogue network model to the application apparatus through the communication link. Correspondingly, the application apparatus may implement a dialogue with the user based on the dialogue network model.

It can be learned from the foregoing analysis that the dialogue system may be applied to different scenarios, and the application apparatus may be different devices for different application scenarios. For example, if the dialogue system is applied to a customer service voice response of an e-commerce store, the application apparatus may be a computer that is in the e-commerce store and in which the dialogue network model is deployed. For another example, if the dialogue system is applied to a customer service voice response of a bank, the application apparatus may be an intelligent robot in which the dialogue network model is deployed. For another example, if the dialogue system is applied to a navigation scenario, the application apparatus may be a vehicle-mounted terminal in which the dialogue network model is deployed.

It should be understood that the foregoing examples are merely used to describe possible application scenarios of the dialogue system and possible application apparatuses in the possible application scenarios, and cannot be understood as a limitation on the application scenario or a limitation on the application apparatus. For example, the application apparatus may alternatively be a mobile terminal or a smart speaker, and is not listed one by one herein.

The application apparatus may include a sound pickup component, to obtain, through the sound pickup component, the first input dialogue data input by the user. The sound pickup component may be an audio collector configured to collect an audio, for example, a microphone.

S202: Generate a first semantic keyword based on the first input dialogue data and obtained first historical dialogue data.

It should be understood that, to avoid cumbersome descriptions, a technical feature of this embodiment that is the same as a technical feature of the foregoing embodiment is not described again in this embodiment.

The first historical dialogue data is data replied by the dialogue system to dialogue data input by the user into the dialogue system before the first input dialogue data is received. Therefore, the first historical dialogue data may be data that is the same as the first sample historical dialogue data, or may be data that is different from the first sample historical dialogue data.

Correspondingly, for an implementation principle of S202, refer to the descriptions of S102. Details are not described herein again.

For example, if the application apparatus is the task-oriented dialogue system, with reference to the foregoing analysis, the task-oriented dialogue system includes the natural language understanding module. Correspondingly, as shown in FIG. 3, the task-oriented dialogue system obtains the first input dialogue data and the first historical dialogue data, and then generates the first semantic keyword through the natural language understanding module.

S203: Perform semantic retrieval in a pre-constructed knowledge base based on the first semantic keyword, to obtain knowledge whose semantics is similar to that of the first semantic keyword.

The knowledge base may include text knowledge and/or a knowledge graph.

Similarly, for an implementation principle of S203, refer to the descriptions of S103. Details are not described herein again.

With reference to the foregoing analysis and FIG. 3, semantic retrieval is performed in the text knowledge and/or the knowledge graph based on the first semantic keyword, to obtain the knowledge whose semantics is similar to that of the first semantic keyword.

S204: Input, into the dialogue network model obtained through training according to the method described in S101 to S104, the first input dialogue data, the first historical dialogue data, and the obtained knowledge whose semantics is similar to that of the first semantic keyword, to obtain first feedback dialogue data fed back to the user.

With reference to the foregoing analysis and FIG. 3, the first input dialogue data, the first historical dialogue data, and the obtained knowledge whose semantics is similar to that of the first semantic keyword are input into the dialogue network model, to obtain the first feedback dialogue data fed back to the user.

It can be learned from the foregoing analysis that the dialogue network model obtains, through learning in the training phase described in S101 to S104, a capability of predicting the dialogue data fed back to the user. Therefore, in an application phase, the dialogue network model may determine, based on the input, the first feedback dialogue data for replying to the first input dialogue data input by the user.

S205: Output the first feedback dialogue data fed back to the user.

For example, the application apparatus may include an output component, to output, through the output component, the first feedback data fed back to the user. The output component may be a speaker.

In some embodiments, sensitive information in the first feedback dialogue data may be filtered out in a public opinion control manner, to obtain first feedback dialogue data after filtering, and the first feedback dialogue data that is obtained after filtering and that is fed back to the user is output.

With reference to the foregoing analysis and FIG. 3, the dialogue system may include a public opinion control module. An output (namely, the first feedback dialogue data) of the dialogue network model may be input into the public opinion control module, so that the public opinion control module performs filtering on the first feedback dialogue data. In this way, an output reply of the dialogue system is first feedback data obtained after filtering.

However, with rapid development of the Internet and rapid increase of information, knowledge increases and is updated every day continuously, and the text knowledge and the knowledge graph are slowly updated. Therefore, the text knowledge and knowledge graph may not include knowledge such as hot events and hot topics due to untimely update. In addition, representation of the text knowledge and knowledge in the knowledge graph is usually sparse and limited, and it is difficult to represent knowledge at different granularities. Therefore, knowledge represented based on the text knowledge and the knowledge graph is incomplete. Further, it is difficult to fully express and understand knowledge in a single dimension. For example, limited historical dialogue data and single text knowledge may lack key information, resulting in ambiguity and semantic fuzziness.

To avoid at least one of the foregoing problems, the inventor of the present disclosure obtains an inventive concept of the present disclosure through creative efforts: feeding back input dialogue data input by a user in combination of a plurality of different types of knowledge, and further feeding back the input dialogue data input by the user in a "multi-hop supplement" manner.

The plurality of different types of knowledge include: the text knowledge, the knowledge graph, picture knowledge, multi-modal knowledge, and network knowledge. "Multi-hop supplement" means searching one type of knowledge for knowledge related to another type of knowledge.

The multi-modal knowledge is knowledge obtained by combining information of at least two modalities. For example, if multimedia information includes information indicated by a picture, information indicated by a text, and information indicated by an audio, the multimedia information may be the multi-modal knowledge, and the multi-modal knowledge is knowledge obtained by combining the information indicated by the picture, information indicated by the text, and the information indicated by the audio.

The network knowledge may be understood as online knowledge obtained based on a network, for example, online knowledge obtained from Wiki (wiki) based on a network, or online knowledge obtained from an encyclopedia based on a network. Examples are not listed one by one herein.

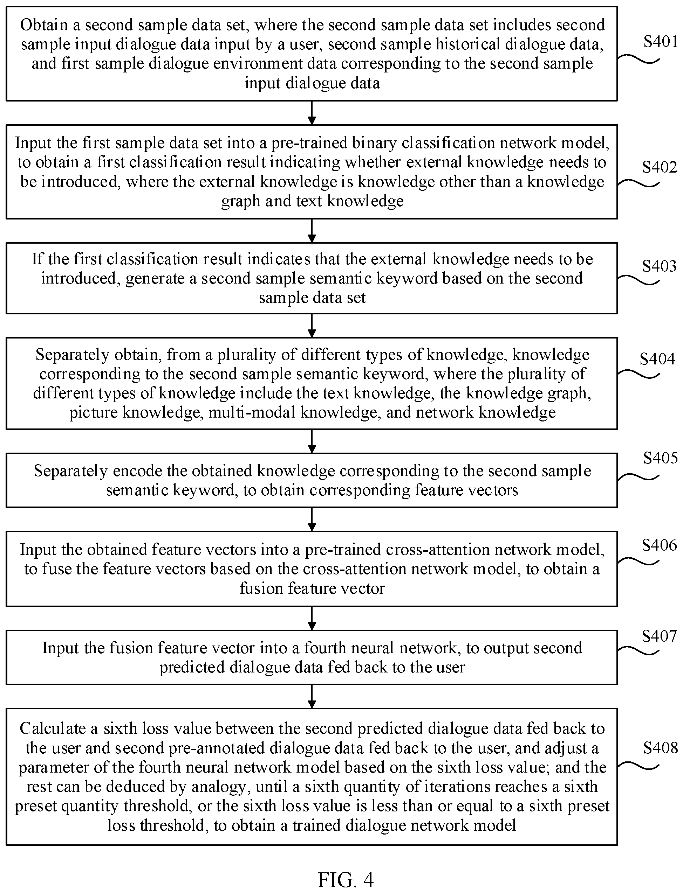

Correspondingly, with reference to FIG. 4, a training principle of the dialogue network model is described below by using an example.

S401: Obtain a second sample data set, where the second sample data set includes second sample input dialogue data input by a user, second sample historical dialogue data, and first sample dialogue environment data corresponding to the second sample input dialogue data.

Similarly, a technical feature of this embodiment that is the same as a technical feature of the foregoing embodiment is not described again in this embodiment. For example, an execution body of this embodiment may be a training apparatus. The training apparatus may be deployed on a cloud, may be deployed locally, or the like. Examples are not listed one by one herein.

The first sample dialogue environment data may be understood as data used to describe an object in a dialogue scenario, for example, data used to describe a venue in the dialogue scenario, data used to describe a status of the user in the dialogue scenario, or data used to describe an emotion of the user in the dialogue scenario.

S402: Input the second sample data set into a pre-trained binary classification network model, to obtain a first classification result indicating whether external knowledge needs to be introduced.

The external knowledge is knowledge other than a knowledge graph and text knowledge, for example, picture knowledge, multi-modal knowledge, and network knowledge.

The binary classification network model is a neural network model that is obtained through training based on a third sample data set and that is used to determine whether the external knowledge needs to be introduced. For a principle of obtaining the binary classification network model through training, refer to the following steps.

Step 1: Obtain the third sample data set, where the third sample data set includes third sample input dialogue data, third sample historical dialogue data, and second sample dialogue environment data corresponding to the third sample input dialogue data.

Step 2: Input the third sample data set into the binary classification network model, to output a second classification result. The second classification result indicates whether the external knowledge needs to be introduced.

Step 3: Calculate a second loss value between the second classification result and a pre-annotated classification result, and adjust a parameter of the binary classification network model based on the second loss value; and the rest can be deduced by analogy, until a second quantity of iterations reaches a second preset quantity threshold, or the second loss value is less than or equal to a second preset loss threshold, to obtain the trained binary classification network model.

Similarly, the second preset quantity threshold and the second preset loss threshold may be determined based on a requirement, a historical record, an experiment, or the like. This is not limited in embodiments.

A network structure, the parameter, and the like of the binary classification network model are not limited in embodiments. For example, the binary classification network model may be a knowledge distillation (tinybert) model.

S403: If the first classification result indicates that the external knowledge needs to be introduced, generate a second sample semantic keyword based on the second sample data set.

In some embodiments, for a principle of generating the second sample semantic keyword, refer to the foregoing embodiment, for example, the embodiment described in S102.

In some other embodiments, a generative network model may alternatively be obtained through pre-training, to determine the second sample semantic keyword based on the generative network model and the second sample data set. For a principle of obtaining the generative network model through training, refer to the following steps.

Step 1: Obtain a fourth sample data set, where the fourth sample data set includes fourth sample input dialogue data, fourth sample historical dialogue data, and third sample dialogue environment data corresponding to the fourth sample input dialogue data.

Step 2: Input the fourth sample data set into a second neural network model, to output the third sample semantic keyword.

Step 3: Calculate a third loss value between the third sample semantic keyword and a pre-annotated sample semantic keyword, and adjust a parameter of the second neural network model based on the third loss value; and the rest may be deduced by analogy, until a third quantity of iterations reaches a third preset quantity threshold, or the third loss value is less than or equal to a third preset loss threshold, to obtain the trained generative network model.

Similarly, the third preset quantity threshold and the third preset loss threshold may be determined based on a requirement, a historical record, an experiment, or the like. This is not limited in embodiments. A type, a structure, the parameter, and the like of the second neural network model are not limited in embodiments.

Correspondingly, S403 may be replaced with the following: If the first classification result indicates that the external knowledge needs to be introduced, input the second sample data set into a generative network model, to output a second sample semantic keyword.

S404: Separately obtain, from a plurality of different types of knowledge, knowledge corresponding to the second sample semantic keyword.

In other words, knowledge corresponding to the second sample semantic keyword is separately obtained from the text knowledge, the graph knowledge, and the external knowledge.

For example, with reference to the foregoing analysis, the plurality of different types of knowledge include: the text knowledge, the knowledge graph, picture knowledge, multi-modal knowledge, and network knowledge. Therefore, this step may be understood as follows: obtain, from the text knowledge, knowledge corresponding to the second sample semantic keyword, where the obtained knowledge may be referred to as first knowledge for ease of differentiation; obtain, from the knowledge graph, knowledge corresponding to the second sample semantic keyword, where the obtained knowledge may be referred to as second knowledge for ease of differentiation; obtain, from the multi-modal knowledge, knowledge corresponding to the second sample semantic keyword, where the obtained knowledge may be referred to as third knowledge for ease of differentiation; obtain, from the network knowledge, knowledge corresponding to the second sample semantic keyword, where the obtained knowledge may be referred to as fourth knowledge for ease of differentiation; and obtain, from the picture knowledge, knowledge corresponding to the second sample semantic keyword, where the obtained knowledge may be referred to as fifth knowledge for ease of differentiation.

The knowledge corresponding to the second sample semantic keyword may be obtained from the different types of knowledge according to different methods.

For example, the knowledge corresponding to the second sample semantic keyword may be obtained from the network knowledge according to a sentence retrieval method (for example, an algorithm bm25 used to evaluate a correlation), a sparse retrieval method (sparse retrieval method), or the like.

Knowledge corresponding to the second sample semantic keyword may be obtained from the text knowledge and the knowledge graph according to an "encoding+similarity calculation" method.

For example, a graph network (Natural Graph) corresponding to knowledge graph is constructed, and each piece of knowledge in knowledge graph is encoded based on the graph network, to obtain a third vector corresponding to each piece of knowledge in the knowledge graph. The second sample semantic keyword is encoded, to obtain a fourth vector. A second semantic similarity between the fourth vector and each third vector is calculated, and knowledge corresponding to a third vector whose second semantic similarity is greater than a preset second similarity threshold is determined as the knowledge corresponding to the second sample semantic keyword.

In some embodiments, a semantic matching network model may alternatively be obtained through pre-training, to obtain, from the text knowledge and the knowledge graph based on the semantic matching network model, knowledge corresponding to the second sample semantic keyword. For a principle of obtaining the semantic matching network model through training, refer to the following steps.

Step 1: Obtain a fifth sample data set, where the fifth sample data set includes at least one fifth vector and a plurality of sixth vectors.

Step 2: Input the at least one fifth vector and the plurality of sixth vectors into a third neural network model, to output a matching result, where the matching result is a sixth vector that semantically matches the at least one fifth vector.

Step 3: Calculate a fourth loss value between the matching result and a pre-annotated matching result, and adjust a parameter of the third neural network model based on the fourth loss value; and the rest may be deduced by analogy, until a fourth quantity of iterations reaches a fourth preset quantity threshold, or the fourth loss value is less than or equal to a fourth preset loss threshold, to obtain the trained semantic matching network model.

Similarly, the fourth preset quantity threshold and the fourth preset loss threshold may be determined based on a requirement, a historical record, an experiment, or the like. This is not limited in embodiments. A type, a structure, the parameter, and the like of the third neural network model are not limited in embodiments. For example, the third neural network model may be a language representation model (Bidirectional Encoder Representation from Transformers, BERT).

Correspondingly, the fourth vector and each third vector may be input into the semantic matching network model, to output a fourth vector that semantically matches the third vector.

Knowledge corresponding to the second sample semantic keyword may be obtained from the picture knowledge and the multi-modal knowledge according to a dual-tower structure model method. The dual-tower structure model includes a picture encoder and a text encoder. The dual-tower structure model is obtained through training by separately calculating a loss based on the picture encoder and the text encoder. For a specific implementation principle, refer to a related technology. Details are not described herein again.

It should be understood that the foregoing examples are merely used as examples for description. A method for obtaining the knowledge corresponding to the second sample semantic keyword from the different types of knowledge cannot be understood as a limitation on obtaining the knowledge corresponding to the second sample semantic keyword from the different types of knowledge.

In some other embodiments, after the knowledge corresponding to the second sample semantic keyword is obtained from a type of knowledge, supplementary retrieval may be performed in another type of knowledge based on the knowledge, to obtain supplementary retrieval knowledge.

For example, after the first knowledge is obtained, knowledge related to the first knowledge may be obtained from the knowledge graph, and the knowledge may be referred to as the supplementary retrieval knowledge.

For another example, after the first knowledge is obtained, knowledge related to the first knowledge may be separately obtained from the knowledge graph and the text knowledge.

In other words, the supplementary retrieval knowledge may be obtained from another type of knowledge, or the supplementary retrieval knowledge may be obtained from a plurality of other types of knowledge. This is not limited in embodiments.

"Related" in "knowledge related to the first knowledge" may be understood as a strong association with the first knowledge.

It can be learned from the foregoing analysis that the knowledge corresponding to the second sample semantic keyword is obtained from different types of knowledge. However, same knowledge may exist in different types of knowledge. To avoid redundancy and complexity during subsequent processing, after the knowledge corresponding to the second sample semantic keyword is obtained, redundancy removal may be performed on the obtained knowledge corresponding to the second sample semantic keyword, for example, repeated knowledge, same knowledge in different expression manners, and knowledge with a high similarity may be removed from the obtained knowledge corresponding to the second sample semantic keyword (for an implementation principle, refer to the foregoing example, and details are not described herein again).

S405: Separately encode the obtained knowledge corresponding to the second sample semantic keyword, to obtain corresponding feature vectors.

For example, with reference to the foregoing analysis, the first knowledge is encoded to obtain a feature vector corresponding to the first knowledge, where the feature vector may be referred to as a first feature vector for ease of differentiation; the second knowledge is encoded to obtain a feature vector corresponding to the second knowledge, where the feature vector may be referred to as a second feature vector for ease of differentiation; the third knowledge is encoded to obtain a feature vector corresponding to the third knowledge, where the feature vector may be referred to as a third feature vector for ease of differentiation; the fourth knowledge is encoded to obtain a feature vector corresponding to the fourth knowledge, where the feature vector may be referred to as a fourth feature vector for ease of differentiation; and the fifth knowledge is encoded to obtain a feature vector corresponding to the fifth knowledge, where the feature vector may be referred to as a fifth feature vector for ease of differentiation.

S406: Input the obtained feature vectors into a pre-trained cross-attention network model, to fuse the feature vectors based on the cross-attention network model, to obtain a fusion feature vector.

For example, with reference to the foregoing analysis, the first feature vector, the second feature vector, the third feature vector, the fourth feature vector, and the fifth feature vector are separately input into the pre-trained cross-attention network model, to output the fusion feature vector.

In some embodiments, for a training method for obtaining the cross-attention network model through training, refer to the following steps.

Step 1: Obtain a sixth sample data set, where the sixth sample data set includes a first sample feature vector, a second sample feature vector, a third sample feature vector, a fourth sample feature vector, and a fifth sample feature vector.

The first sample feature vector is obtained by encoding knowledge that is obtained from the text knowledge and that corresponds to an annotated semantic keyword. The second sample feature vector is obtained by encoding knowledge that is obtained from knowledge in the knowledge graph and that corresponds to an annotated semantic keyword. The third sample feature vector is obtained by encoding knowledge that is obtained from the multi-modal knowledge and that corresponds to an annotated semantic keyword. The fourth sample feature vector is obtained by encoding knowledge that is obtained from the network knowledge and that corresponds to an annotated semantic keyword. The fifth sample feature vector is obtained by encoding knowledge that is obtained from the picture knowledge and that corresponds to an annotated semantic keyword.

Step 2: Input the sixth sample data set into the cross-attention network model, to output a predicted fusion feature vector.

Step 3: Calculate a fifth loss value between the predicted fusion feature vector and a pre-annotated fusion feature vector, and adjust a parameter of the cross-attention network model based on the fifth loss value; and the rest can be deduced by analogy, until a fifth quantity of iterations reaches a fifth preset quantity threshold, or the fifth loss value is less than or equal to a fifth preset loss threshold, to obtain the trained cross-attention network model.

Similarly, the fifth preset quantity threshold and the fifth preset loss threshold may be determined based on a requirement, a historical record, an experiment, or the like. This is not limited in embodiments.

S407: Input the fusion feature vector into a fourth neural network model, to output second predicted dialogue data fed back to the user.

S408: Calculate a sixth loss value between the second predicted dialogue data fed back to the user and second pre-annotated dialogue data fed back to the user, and adjust a parameter of the fourth neural network model based on the sixth loss value; and the rest can be deduced by analogy, until a sixth quantity of iterations reaches a sixth preset quantity threshold, or the sixth loss value is less than or equal to a sixth preset loss threshold, to obtain the trained dialogue network model.

Similarly, the sixth preset quantity threshold and the sixth preset loss threshold may be determined based on a requirement, a historical record, an experiment, or the like. This is not limited in embodiments. A type, a structure, the parameter, and the like of the fourth neural network model are not limited in embodiments.

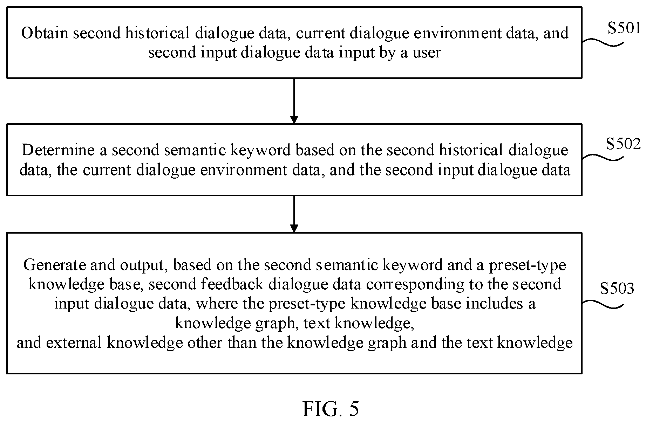

S401 to S408 describe how to obtain the dialogue model through training in a training phase. Based on the foregoing inventive concept, application of the dialogue model is described below by using an example with reference to FIG. 5.

S501: Obtain second historical dialogue data, current dialogue environment data, and second input dialogue data input by a user.

It can be learned from the foregoing analysis that the dialogue network model may be obtained through training on the cloud, or the dialogue network model may be obtained through local training. Correspondingly, the application of the dialogue network model may be implemented on the cloud, or may be implemented locally. However, due to a real-time requirement, an efficient feedback requirement, and the like of a dialogue, the application of the dialogue network model is usually implemented locally.

To facilitate differentiation between an execution body of the dialogue network model obtained through training and an execution body using the dialogue network model, the execution body of the dialogue network model obtained through training may be referred to as a training apparatus, and the execution body using the dialogue network model may be referred to as an application apparatus. The training apparatus and the application apparatus may be a same apparatus, or may be different apparatuses. This is not limited in embodiments.

In some embodiments, if the training apparatus is an apparatus deployed on the cloud, and the application apparatus is an apparatus deployed locally, the training apparatus may establish a communication link to the application apparatus. After obtaining the dialogue network model through training, the training apparatus may send the dialogue network model to the application apparatus through the communication link. Correspondingly, the application apparatus may implement a dialogue with the user based on the dialogue network model.

It can be learned from the foregoing analysis that the dialogue system may be applied to different scenarios, and the application apparatus may be different devices for different application scenarios. For example, if the dialogue system is applied to a customer service voice response of an e-commerce store, the application apparatus may be a computer that is in the e-commerce store and in which the dialogue network model is deployed. For another example, if the dialogue system is applied to a customer service voice response of a bank, the application apparatus may be an intelligent robot in which the dialogue network model is deployed. For another example, if the dialogue system is applied to a navigation scenario, the application apparatus may be a vehicle-mounted terminal in which the dialogue network model is deployed.

It should be understood that the foregoing examples are merely used to describe possible application scenarios of the dialogue system and possible application apparatuses in the possible application scenarios, and cannot be understood as a limitation on the application scenario or a limitation on the application apparatus. For example, the application apparatus may alternatively be a mobile terminal or a smart speaker, and is not listed one by one herein.

The application apparatus may include a sound pickup component, to obtain, through the sound pickup component, the second input dialogue data input by the user. The sound pickup component may be an audio collector configured to collect an audio, for example, a microphone.

The current dialogue environment data may be obtained based on a sensor disposed in the application apparatus, and sensors in different application scenarios may be different. For example, in a scenario of a dialogue between an indoor user and a smart speaker, the sensor may be an image capture apparatus. For another example, in a scenario of a dialogue between an outdoor user and a vehicle-mounted terminal, the sensor may be a speed sensor. Examples are not listed one by one herein.

S502: Determine a second semantic keyword based on the second historical dialogue data, the current dialogue environment data, and the second input dialogue data.

In this embodiment, the second semantic keyword is determined based on the data in three dimensions (namely, the second historical dialogue data, the current dialogue environment data, and the second input dialogue data), so that the second semantic keyword has a current environment feature, a current user dialogue feature, and a historical dialogue feature. In this way, the second semantic keyword has high reliability.

S503: Generate and output, based on the second semantic keyword and a preset-type knowledge base, second feedback dialogue data corresponding to the second input dialogue data, where the preset-type knowledge base includes a knowledge graph, text knowledge, and external knowledge other than the knowledge graph and the text knowledge.

In this embodiment, the external knowledge is introduced, so that the second feedback dialogue data is generated and output in combination of the external knowledge. This reduces a case in which the application apparatus cannot understand an input of the user, and resolves disadvantages of slow updating of the text knowledge and the knowledge graph, difficulty in implementing comprehensive coverage and maintenance, sparse and limited knowledge, and difficulty in fully expressing comprehensive knowledge with single text knowledge. In this way, validity and reliability of human-computer dialogue are realized.

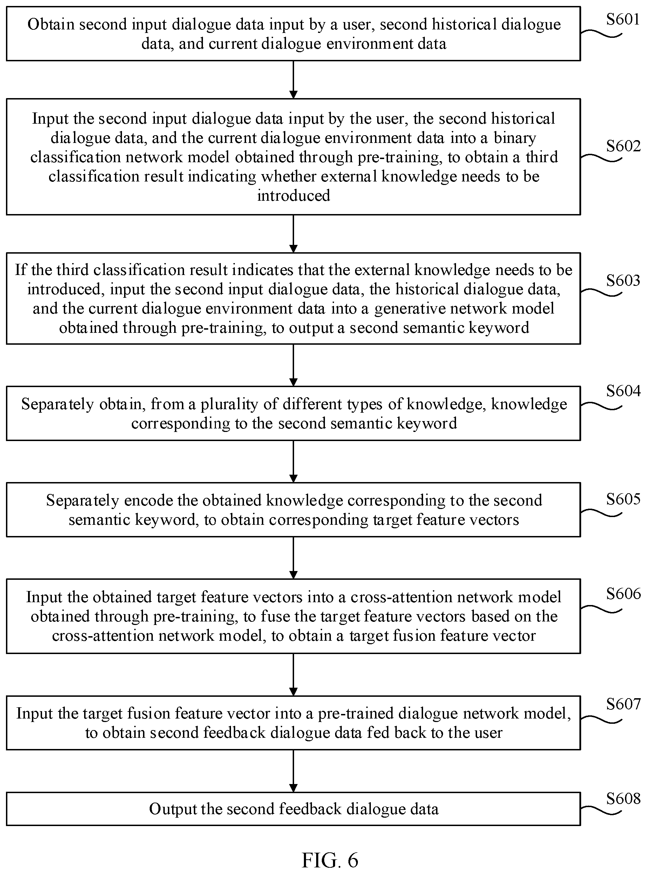

To enable a reader to deeply understand the present disclosure, application of the dialogue model is described below with reference to FIG. 6.

S601: Obtain second input dialogue data input by a user, second historical dialogue data, and current dialogue environment data.

It should be understood that, to avoid cumbersome descriptions, a technical feature of this embodiment that is the same as a technical feature of the foregoing embodiment is not limited in embodiments.

S602: Input the second input dialogue data input by the user, the second historical dialogue data, and the current dialogue environment data into a binary classification network model obtained through training according to the method described in the foregoing example, to obtain a third classification result indicating whether external knowledge needs to be introduced.

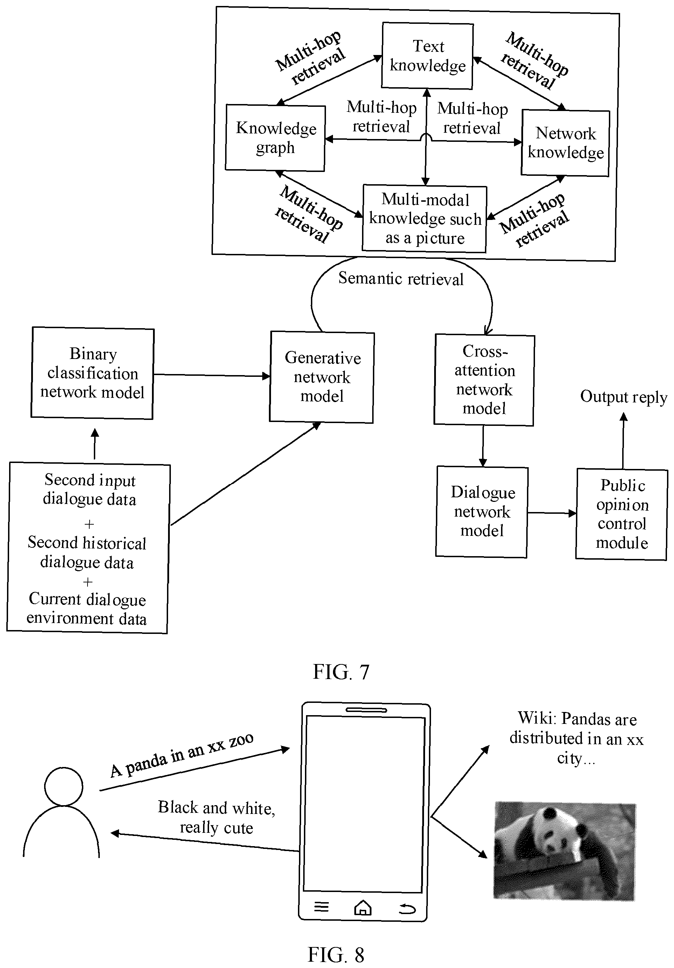

For example, if the application apparatus is a task-oriented dialogue system, as shown in FIG. 7, the task-oriented dialogue system includes the binary classification network model. Inputs of the binary classification network model are the second input dialogue data, the second historical dialogue data, and the current dialogue environment data, and an output of the binary classification network model is the third classification result.

S603: If the third classification result indicates that the external knowledge needs to be introduced, input the second input dialogue data, the historical dialogue data, and the current dialogue environment data into a generative network model obtained through training according to the method described in the foregoing example, to output a second semantic keyword.

With reference to the foregoing analysis and FIG. 6, the task-oriented dialogue system further includes the generative network model. Inputs of the generative network model are the second input dialogue data, the historical dialogue data, and the current dialogue environment data, and an output of the generative network model is the second semantic keyword.

S604: Obtain, from a plurality of different types of knowledge, knowledge corresponding to the second semantic keyword.

For an implementation principle of S604, refer to the descriptions of S404. Details are not described herein again.

With reference to the foregoing analysis and FIG. 7, the plurality of different types of knowledge include: text knowledge, a knowledge graph, picture knowledge, multi-modal knowledge, and network knowledge. Because the picture knowledge may include both image content and text content, the picture knowledge and the multi-modal knowledge are referred to as multi-modal knowledge such as a picture.

As shown in FIG. 7, the knowledge corresponding to the second semantic keyword may be separately obtained from the text knowledge, the knowledge graph, the multi-modal knowledge such as a picture, and the network knowledge. In addition, more knowledge corresponding to the second semantic keyword may be obtained in a "multi-hop retrieval" manner shown in FIG. 7.

Correspondingly, to avoid redundancy of the knowledge corresponding to the second semantic keyword, redundancy removal may be performed on the obtained knowledge corresponding to the second semantic keyword in a "cross-validation" manner. "Cross-validation" means to verify the knowledge that corresponds to the second semantic keyword and that is obtained from at least two different types of knowledge, to determine whether there is redundant knowledge, and then remove the redundant knowledge.

S605: Separately encode the obtained knowledge corresponding to the second semantic keyword, to obtain corresponding target feature vectors.

S606: Input the obtained target feature vectors into the cross-attention network model obtained through training in the manner described in the foregoing example, to fuse the target feature vectors based on the cross-attention network model, to obtain a target fusion feature vector.

With reference to the foregoing analysis and FIG. 7, the task-oriented dialogue system further includes the cross-attention network model. An input of the cross-attention network model is a result of separately encoding the obtained knowledge corresponding to the second semantic keyword, and an output of the cross-attention network model is the target fusion feature vector.

S607: Input the target fusion feature vector into the dialogue network model obtained through training based on the example in S401 to S408, to obtain second feedback dialogue data fed back to the user.

With reference to the foregoing analysis and FIG. 7, the task-oriented dialogue system further includes a dialogue network model. An output of the cross-attention network model is an input of the dialogue network model, and an output of the dialogue network model is the second feedback dialogue data.

Similarly, in some embodiments, sensitive information in the second feedback dialogue data may be filtered out in a public opinion control manner, to obtain second feedback dialogue data after filtering, so that the second feedback dialogue data obtained after filtering is fed back to the user.

With reference to the foregoing analysis and FIG. 7, the task-oriented dialogue system further includes a public opinion control module. An input of the public opinion control module is an output of the dialogue network model, so that the public opinion control module performs filtering on the first feedback dialogue data. In this way, an output reply of the dialogue system is first feedback data obtained after filtering.

S608: Output the second feedback dialogue data.

For example, as shown in FIG. 8, in a scenario of a dialogue between the user and a mobile terminal, if the second input dialogue data is "Panda in an xx zoo", according to the foregoing method, a dialogue system (for example, a voice assistant) in the mobile terminal may determine that the second semantic keyword of the second input dialogue data is "panda". In this case, knowledge corresponding to "panda" may be obtained from the network knowledge, for example, knowledge about the panda "Pandas are distributed in an xx city..." is obtained from Wiki shown in FIG. 8, or picture knowledge of the panda shown in FIG. 8 may be obtained.

Correspondingly, according to the method described in the foregoing example, the second feedback dialogue data output by the dialogue system in the mobile terminal may be "Black and white, really cute" shown in FIG. 8.

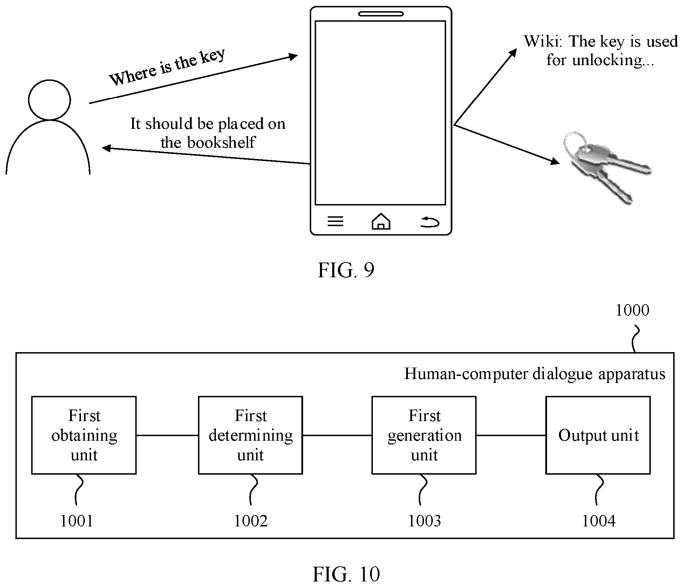

For another example, as shown in FIG. 9, in a scenario of a dialogue between the user and a mobile terminal, if the second input dialogue data is "Where is the key", according to the foregoing method, a dialogue system (for example, a voice assistant) in the mobile terminal may determine that the second semantic keyword of the second input dialogue data is "key". In this case, knowledge corresponding to the "key" may be obtained from the network knowledge, for example, knowledge about the key "The key is used for unlocking..." is obtained from Wiki shown in FIG. 9, or picture knowledge of the key shown in FIG. 9 may be obtained.

Correspondingly, according to the method described in the foregoing example, the second feedback dialogue data output by the dialogue system in the mobile terminal may be "It should be placed on the bookshelf" shown in FIG. 9.

It should be understood that the examples shown in FIG. 8 and FIG. 9 are merely used as examples for description, and that obtaining the knowledge corresponding to the second semantic keyword may be obtained cannot be understood as a limitation on obtaining the knowledge corresponding to the second semantic keyword.

It should be noted that "first", "second", and the like in the present disclosure are merely used to distinguish between technical features in different embodiments, and cannot be understood as limitations on the technical features. For example, the first neural network model and the second neural network model may be neural network models of a same type. For another example, the third sample data set and the fourth sample data set may be a same data set. For another example, the first preset quantity threshold may be greater than the second quantity threshold, or may be less than the second quantity threshold, or may be equal to the second quantity threshold. Examples are not listed one by one herein.

According to another aspect of the present disclosure, the present disclosure further provides a human-computer dialogue apparatus. FIG. 10 is a diagram of a human-computer dialogue apparatus according to an embodiment of the present disclosure. As shown in FIG. 10, the human-computer dialogue apparatus 100 includes:
a first obtaining unit 1001, configured to obtain second historical dialogue data, current dialogue environment data, and second input dialogue data input by a user;
a first determining unit 1002, configured to determine a second semantic keyword based on the second historical dialogue data, the current dialogue environment data, and the second input dialogue data;
a first generation unit 1003, configured to generate, based on the second semantic keyword and a preset-type knowledge base, second feedback dialogue data corresponding to the second input dialogue data, where the preset-type knowledge base includes a knowledge graph, text knowledge, and external knowledge other than the knowledge graph and the text knowledge; and
an output unit 1004, configured to output the second feedback dialogue data.

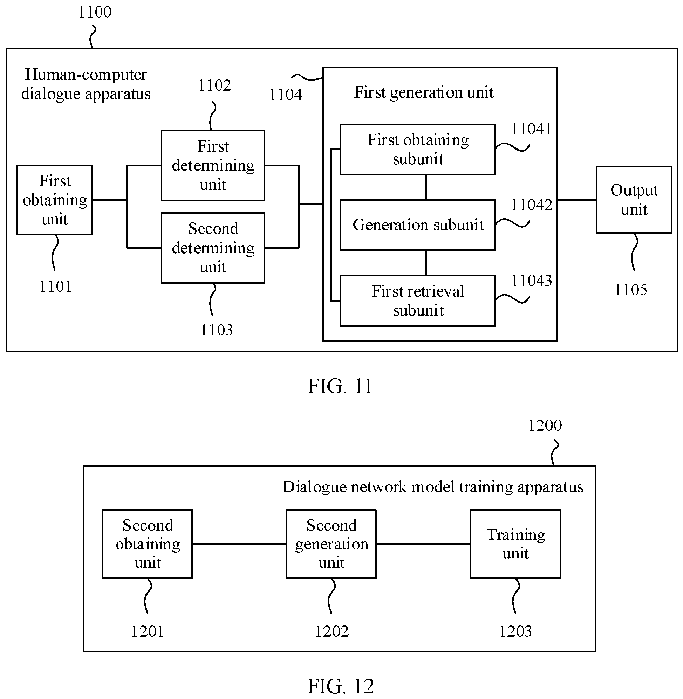

FIG. 11 is a diagram of a human-computer dialogue apparatus according to another embodiment of the present disclosure. As shown in FIG. 11, the human-computer dialogue apparatus 1100 includes:
a first obtaining unit 1101, configured to obtain second historical dialogue data, current dialogue environment data, and second input dialogue data input by a user; and
a first determining unit 1102, configured to determine a second semantic keyword based on the second historical dialogue data, the current dialogue environment data, and the second input dialogue data.

In some embodiments, the second semantic keyword is obtained by inputting the second historical dialogue data, the current dialogue environment data, and the second input dialogue data into a pre-trained generative network model.

The generative network model is a model for learning, based on a fourth sample data set, a capability of a third sample semantic keyword corresponding to the fourth sample data set, and the fourth sample data set includes fourth sample input dialogue data, fourth sample historical dialogue data, and third sample dialogue environment data corresponding to the fourth sample input dialogue data.

A second determining unit 1103 determines, based on the second historical dialogue data, the current dialogue environment data, and the second input dialogue data, a third classification result indicating whether the external knowledge needs to be introduced.

A first generation unit 1104 is configured to generate, based on the second semantic keyword and a preset-type knowledge base, second feedback dialogue data corresponding to the second input dialogue data, where the preset-type knowledge base includes a knowledge graph, text knowledge, and external knowledge other than the knowledge graph and the text knowledge.

In some embodiments, the first generation unit 1104 is configured to: if the third classification result indicates that the external knowledge needs to be introduced, generate, based on the second semantic keyword and the preset-type knowledge base, the second feedback dialogue data corresponding to the second input dialogue data.

In some embodiments, the third classification result is obtained by inputting the second historical dialogue data, the current dialogue environment data, and the second input dialogue data into a pre-trained binary classification network model.

The binary classification network model is a model for learning, based on a third sample data set, a capability of determining whether the external knowledge needs to be introduced, and the third sample data set includes third sample input dialogue data, third sample historical dialogue data, and second sample dialogue environment data corresponding to the third sample input dialogue data.

With reference to FIG. 11, it can be learned that, in some embodiments, the first generation unit 1104 includes:
a first obtaining subunit 11041, configured to separately obtain, from the external knowledge, the knowledge graph, and the text knowledge, knowledge corresponding to the second semantic keyword; and
a generation subunit 11042, configured to generate the second feedback dialogue data based on the obtained knowledge corresponding to the second semantic keyword.

In some embodiments, as shown in FIG. 11, the first generation unit 1104 further includes:
a first retrieval subunit 11043, configured to retrieve, from at least one of other types of knowledge based on knowledge that is obtained from first-type knowledge and that corresponds to the second semantic keyword, knowledge associated with the knowledge that is obtained from the first-type knowledge and that corresponds to the second semantic keyword.

The knowledge that is in the at least one of other types of knowledge and that corresponds to the second semantic keyword includes the retrieved knowledge associated with the knowledge that is obtained from the first-type knowledge and that corresponds to the second semantic keyword; the first-type knowledge is any one of the external knowledge, the knowledge graph, and the text knowledge; and the at least one of other types of knowledge is type knowledge other than the first-type knowledge in the external knowledge, the knowledge graph, and the text knowledge.

In some embodiments, the generation subunit 11042 includes:
a first encoding module, configured to separately encode the obtained knowledge corresponding to the second semantic keyword, to obtain corresponding target feature vectors; and
a first generation module, configured to generate the second feedback dialogue data based on the corresponding target feature vectors.

In some embodiments, the first generation module includes:
a first fusion submodule, configured to fuse the corresponding target feature vectors to obtain a target fusion feature vector; and
a generation submodule, configured to generate the second feedback dialogue data based on the target fusion feature vector.

In some embodiments, the generation subunit 11042 further includes:
a first processing module, configured to perform redundancy removal on the obtained knowledge corresponding to the second semantic keyword, to obtain knowledge after redundancy removal;
a second generation module, configured to generate the second feedback dialogue data based on the knowledge obtained after redundancy removal; and
an output unit 1105, configured to output the second feedback dialogue data.

According to another aspect of the present disclosure, the present disclosure further provides a dialogue network model training apparatus. FIG. 12 is a diagram of a dialogue network model training apparatus according to an embodiment of the present disclosure. As shown in FIG. 12, the dialogue network model training apparatus 1200 includes:
a second obtaining unit 1201, configured to obtain a second sample data set, where the second sample data set includes second sample input dialogue data input by a user, second sample historical dialogue data, and first sample dialogue environment data corresponding to the second sample input dialogue data;
a second generation unit 1202, configured to generate a second sample semantic keyword based on the second sample data set; and
a training unit 1203, configured to obtain, through training based on the second sample semantic keyword and a preset-type knowledge base, a dialogue network model that has a capability of predicting feedback dialogue data corresponding to input dialogue data, where the preset-type knowledge base includes a knowledge graph, text knowledge, and external knowledge other than the knowledge graph and the text knowledge.

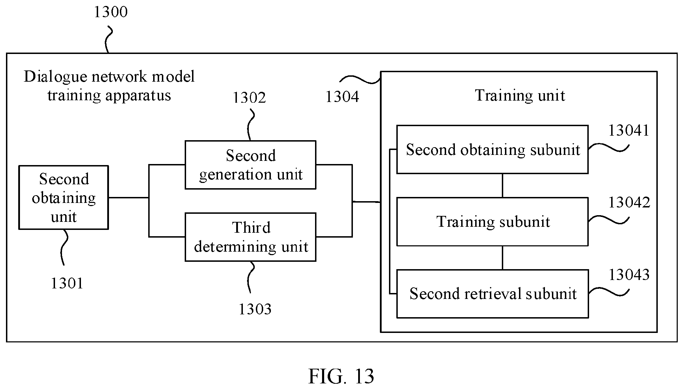

FIG. 13 is a diagram of a dialogue network model training apparatus according to another embodiment of the present disclosure. As shown in FIG. 13, the dialogue network model training apparatus includes:
a second obtaining unit 1301, configured to obtain a second sample data set, where the second sample data set includes second sample input dialogue data input by a user, second sample historical dialogue data, and first sample dialogue environment data corresponding to the second sample input dialogue data;
a second generation unit 1302, configured to generate a second sample semantic keyword based on the second sample data set;
a third determining unit 1303, configured to determine, based on the second sample data set, a first classification result indicating whether the external knowledge needs to be introduced; and
a training unit 1304, configured to obtain, through training based on the second sample semantic keyword and a preset-type knowledge base, a dialogue network model that has a capability of predicting feedback dialogue data corresponding to input dialogue data, where the preset-type knowledge base includes a knowledge graph, text knowledge, and external knowledge other than the knowledge graph and the text knowledge.

In some embodiments, the first classification result is obtained by inputting the second sample data set into a pre-trained binary classification network model.

The binary classification network model is a model for learning, based on a third sample data set, a capability of determining whether the external knowledge needs to be introduced, and the third sample data set includes third sample input dialogue data, third sample historical dialogue data, and second sample dialogue environment data corresponding to the third sample input dialogue data.

The second sample semantic keyword is obtained by inputting the second sample data set into a pre-trained generative network model.

The generative network model is a model for learning, based on a fourth sample data set, a capability of a third sample semantic keyword corresponding to the fourth sample data set, and the fourth sample data set includes fourth sample input dialogue data, fourth sample historical dialogue data, and third sample dialogue environment data corresponding to the fourth sample input dialogue data.

In some embodiments, the training unit 1304 is configured to: if the first classification result indicates that the external knowledge needs to be introduced, obtain the dialogue network model through training based on the second sample semantic keyword and the preset-type knowledge base.

With reference to FIG. 13, it can be learned that, in some embodiments, the training unit 1304 includes:
a second obtaining subunit 13041, configured to separately obtain, from the external knowledge, the knowledge graph, and the text knowledge, knowledge corresponding to the second sample semantic keyword; and
a training subunit 13042, configured to obtain the dialogue network model through training based on the obtained knowledge corresponding to the second sample semantic keyword.

In some embodiments, the training subunit 13042 includes:
a second encoding module, configured to separately encode the obtained knowledge corresponding to the second sample semantic keyword, to obtain corresponding feature vectors.

In some embodiments, the second encoding module includes:
a second fusion submodule, configured to fuse the corresponding feature vectors to obtain a fusion feature vector; and
an input submodule, configured to input the fusion feature vector into a fourth neural network model, to output second predicted dialogue data fed back to the user; and
an adjustment submodule, configured to adjust a parameter of the fourth neural network model based on the second predicted dialogue data fed back to the user and second pre-annotated dialogue data fed back to the user, to obtain the dialogue network model.

In some embodiments, the fusion feature vector is obtained by inputting the corresponding feature vectors into a cross-attention network model obtained through pre-training.

A first training module is configured to obtain the dialogue network model through training based on the corresponding feature vectors.

With reference to FIG. 13, it can be learned that, in some embodiments, the training unit 1304 further includes:
a second retrieval subunit 13043, configured to retrieve, from at least one of other types of knowledge based on knowledge that is obtained from first-type knowledge and that corresponds to the second sample semantic keyword, knowledge associated with the knowledge that is obtained from the first-type knowledge and that corresponds to the second sample semantic keyword.

The knowledge that is in the at least one of other types of knowledge and that corresponds to the second sample semantic keyword includes the retrieved knowledge associated with the knowledge that is obtained from the first-type knowledge and that corresponds to the second sample semantic keyword; the first-type knowledge is any one of the external knowledge, the knowledge graph, and the text knowledge; and the at least one of other types of knowledge is type knowledge other than the first-type knowledge in the external knowledge, the knowledge graph, and the text knowledge.

In some embodiments, the training subunit 13042 further includes:
a second processing module, configured to perform redundancy removal on the obtained knowledge corresponding to the second sample semantic keyword, to obtain knowledge after redundancy removal; and
a second training module, configured to obtain the dialogue network model through training based on the knowledge obtained after redundancy removal.

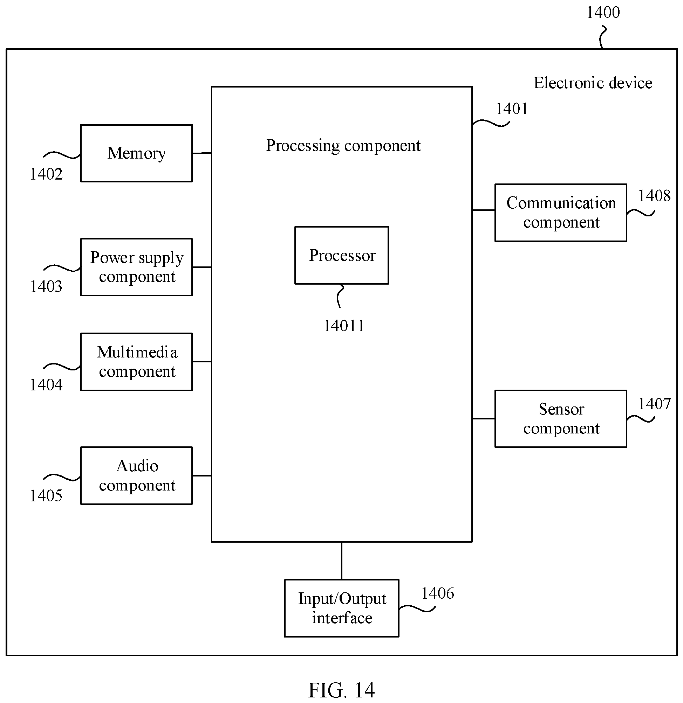

FIG. 14 is a diagram of an electronic device according to an embodiment of the present disclosure. As shown in FIG. 14, the electronic device 1400 may include one or more of the following components: a processing component 1401, a memory 1402, a power supply component 1403, a multimedia component 1404, an audio component 1405, an input/output (I/O) interface 1406, a sensor component 1407, and a communication component 1408.

The processing component 1401 usually controls overall operations of the electronic device 1400, for example, operations related to video playing, display, a phone call, data communication, a camera operation, and a recording operation. The processing component 1401 may include one or more processors 14011 to execute instructions, to complete all or some of the steps of the foregoing method. In addition, the processing component 1401 may include one or more modules, to facilitate interaction between the processing component 1401 and another component. For example, the processing component 1401 may include a multimedia module, to facilitate interaction between the multimedia component 1404 and the processing component 1401.

The memory 1402 is configured to store various types of data to support an operation on the electronic device 1400. An example of the data includes instructions of any application or method for performing an operation on the electronic device 1400, for example, a video, contact data, phonebook data, a message, and a picture. The memory 1402 may be implemented by any type of volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The power supply component 1403 supplies power to various components of the electronic device 1400. The power supply component 1403 may include a power management system, one or more power supplies, and another component associated with power generation, power management, and power distribution of the electronic device 1400.

The multimedia component 1404 includes a screen that is between the electronic device 1400 and a user and that provides an output interface. In some embodiments, the screen may include a liquid crystal display (LCD) and a touch panel (TP). If the screen includes a touch panel, the screen may be implemented as a touchscreen to receive an input signal from the user. The touch panel includes one or more touch sensors to sense a touch, sliding, and gestures on the touch panel. The touch sensor can sense a boundary of a touch or sliding action, and can detect duration and pressure associated with the touch or sliding action. In some embodiments, the multimedia component 1404 includes a front-facing camera and/or a rear-facing camera. When the electronic device 1400 is in an operating mode, for example, a photo mode or a video mode, the front-facing camera and/or the rear-facing camera may receive external multimedia data. The front-facing camera and the rear-facing camera each may be a fixed optical lens system or have a focal length and an optical zooming capability.

The audio component 1405 is configured to output and/or input audio data. For example, the audio component 1405 includes a microphone (MIC). When the electronic device 1400 is in an operating mode, for example, a call mode, a recording mode, or a speech recognition mode, the microphone is configured to receive external audio data. The received audio data may be further stored in the memory 1402 or sent through the communication component 1408. In some embodiments, the audio component 1405 further includes a speaker, configured to output audio data, for example, output an audio gain determined according to the method in the foregoing embodiment and the original audio data.

The I/O interface 1406 provides an interface between the processing component 1401 and a peripheral interface module, where the peripheral interface module may be a keyboard, a click wheel, a button, or the like. The button may include but is not limited to a home button, a volume button, a start button, and a lock button.

The sensor component 1407 includes one or more sensors, configured to provide evaluation of various statuses for the electronic device 1400. For example, the sensor component 1407 may detect an on/off state of the electronic device 1400 and relative positioning of the component, for example, the component is a display and a keypad of the electronic device 1400. The sensor component 1407 may further detect a position change of the electronic device 1400 or a position change of a component of the electronic device 1400, existence or absence of contact between the user and the electronic device 1400, a position or acceleration/deceleration of the electronic device 1400, and a temperature change of the electronic device 1400. The sensor component 1407 may include a proximity sensor, configured to: when there is no physical contact, detect whether a nearby object exists. The sensor component 1407 may further include an optical sensor, for example, a CMOS or CCD image sensor, for use in imaging application. In some embodiments, the sensor component 1407 may further include an acceleration sensor, a gyroscope sensor, a magnetic sensor, a pressure sensor, or a temperature sensor.

The communication component 1408 is configured to facilitate wired or wireless communication between the electronic device 1400 and another device. The electronic device 1400 may access a wireless network that is based on a communication standard, for example, Wi-Fi, 2G, 3G, or a combination thereof. In an example embodiment, the communication component 1408 receives a broadcast signal or broadcast-related information from an external broadcast management system through a broadcast channel. In an example embodiment, the communication component 1408 further includes a near field communication (NFC) module, to facilitate short-range communication. For example, the NFC module may be implemented based on a radio frequency identification (RFID) technology, an infrared data association (IrDA) technology, an ultra-wideband (UWB) technology, a Bluetooth (BT) technology, and another technology.

In an example embodiment, the electronic device 1400 may be implemented by one or more of the following: an application-specific integrated circuit (ASIC), a digital signal processor (DSP), a digital signal processing device (DSPD), a programmable logic device (PLD), a field programmable gate array (FPGA), a controller, a microcontroller, a microprocessor, or another electronic component, and is configured to perform the foregoing method.

In an example embodiment, a non-transitory computer-readable storage medium including instructions is further provided, for example, the memory 1402 including instructions. The instructions may be executed by the processor 14011 of the electronic device 1400, to complete the foregoing method. For example, the non-transitory computer-readable storage medium may be a ROM, a random access memory (RAM), a CD-ROM, a magnetic tape, a floppy disk, an optical data storage device, or the like.

According to another aspect of embodiments of the present disclosure, an embodiment of the present disclosure further provides a computer storage medium, where the computer storage medium stores computer instructions. When the computer instructions are run by a processor, the human-computer interaction method according to any one of the foregoing embodiments is performed, or the dialogue network model training method according to any one of the foregoing embodiments is performed.

According to another aspect of embodiments of the present disclosure, an embodiment of the present disclosure further provides a computer program product. When the computer program product runs on a processor, the human-computer interaction method according to any one of the foregoing embodiments is performed, or the dialogue network model training method according to any one of the foregoing embodiments is performed.

According to another aspect of embodiments of the present disclosure, an embodiment of the present disclosure further provides a chip, including:
an input interface, configured to obtain second historical dialogue data, current dialogue environment data, and second input dialogue data input by a user;
a logic circuit, configured to perform the human-computer interaction method according to any one of the foregoing embodiments, to obtain second feedback dialogue data corresponding to the second input dialogue data; and
an output interface, configured to output the second feedback dialogue data.

According to another aspect of embodiments of the present disclosure, an embodiment of the present disclosure further provides a chip, including:
an input interface, configured to obtain a second sample data set, where the second sample data set includes second sample input dialogue data input by a user, second sample historical dialogue data, and first sample dialogue environment data corresponding to the second sample input dialogue data;
a logic circuit, configured to perform the dialogue network model training method according to any one of the foregoing embodiments, to obtain a dialogue network model that has a capability of predicting feedback dialogue data corresponding to input dialogue data; and
an output interface, configured to output the dialogue network model.

According to another aspect of embodiments of the present disclosure, an embodiment of the present disclosure further provides a terminal device, including:
a data collection apparatus, configured to obtain second historical dialogue data, current dialogue environment data, and second input dialogue data input by a user; and
a dialogue system, configured to: determine a second semantic keyword based on the second historical dialogue data, the current dialogue environment data, and the second input dialogue data; and generate and output, based on the second semantic keyword and a preset-type knowledge base, second feedback dialogue data corresponding to the second input dialogue data, where the preset-type knowledge base includes a knowledge graph, text knowledge, and external knowledge other than the knowledge graph and the text knowledge.

It should be understood that steps may be reordered, added, or deleted by using the foregoing various forms of processes. For example, the steps described in the present disclosure may be performed in parallel, may be sequentially performed, or may be performed in a different sequence, provided that an expected result of the technical solutions disclosed in the present disclosure can be implemented. This is not limited herein.

The foregoing specific implementations do not constitute a limitation on the protection scope of the present disclosure. A person skilled in the art should understand that various modifications, combinations, subcombinations, and substitutions may be made based on a design requirement and another factor. Any modification, equivalent replacement, improvement, and the like made in the spirit and principle of the present disclosure shall fall within the protection scope of the present disclosure.

## Claims

1. A human-computer dialogue method, wherein the method comprises:
obtaining second historical dialogue data, current dialogue environment data, and second input dialogue data input by a user;
determining a second semantic keyword based on the second historical dialogue data, the current dialogue environment data, and the second input dialogue data; and
generating and outputting, based on the second semantic keyword and a preset-type knowledge base, second feedback dialogue data corresponding to the second input dialogue data, wherein the preset-type knowledge base comprises a knowledge graph, text knowledge, and external knowledge other than the knowledge graph and the text knowledge.

2. The method according to claim 1, wherein the generating and outputting, based on the second semantic keyword and a preset-type knowledge base, second feedback dialogue data corresponding to the second input dialogue data comprises:
separately obtaining, from the external knowledge, the knowledge graph, and the text knowledge, knowledge corresponding to the second semantic keyword; and
generating and outputting the second feedback dialogue data based on the obtained knowledge corresponding to the second semantic keyword.

3. The method according to claim 2, wherein after the separately obtaining, from the external knowledge, the knowledge graph, and the text knowledge, knowledge corresponding to the second semantic keyword, the method further comprises:
retrieving, from at least one of other types of knowledge based on knowledge that is obtained from first-type knowledge and that corresponds to the second semantic keyword, knowledge associated with the knowledge that is obtained from the first-type knowledge and that corresponds to the second semantic keyword, wherein
the knowledge that is in the at least one of other types of knowledge and that corresponds to the second semantic keyword comprises the retrieved knowledge associated with the knowledge that is obtained from the first-type knowledge and that corresponds to the second semantic keyword; the first-type knowledge is any one of the external knowledge, the knowledge graph, and the text knowledge; and the at least one of other types of knowledge is type knowledge other than the first-type knowledge in the external knowledge, the knowledge graph, and the text knowledge.

4. The method according to claim 2, wherein the generating and outputting the second feedback dialogue data based on the obtained knowledge corresponding to the second semantic keyword comprises:
separately encoding the obtained knowledge corresponding to the second semantic keyword, to obtain corresponding target feature vectors; and
generating and outputting the second feedback dialogue data based on the corresponding target feature vectors.

5. The method according to claim 4, wherein the generating and outputting the second feedback dialogue data based on the corresponding target feature vectors comprises:
fusing the corresponding target feature vectors to obtain a target fusion feature vector; and
generating and outputting the second feedback dialogue data based on the target fusion feature vector.

6. The method according to claim 5, wherein the target fusion feature vector is obtained by inputting the corresponding target feature vectors into a cross-attention network model obtained through pre-training.

7. The method according to any one of claims 2 to 6, wherein the generating and outputting the second feedback dialogue data based on the obtained knowledge corresponding to the second semantic keyword comprises:
performing redundancy removal on the obtained knowledge corresponding to the second semantic keyword, to obtain knowledge after redundancy removal; and
generating and outputting the second feedback dialogue data based on the knowledge obtained after redundancy removal.

8. The method according to any one of claims 1 to 6, wherein the method further comprises:
determining, based on the second historical dialogue data, the current dialogue environment data, and the second input dialogue data, a third classification result indicating whether the external knowledge needs to be introduced; and
the generating and outputting, based on the second semantic keyword and a preset-type knowledge base, second feedback dialogue data corresponding to the second input dialogue data comprises: if the third classification result indicates that the external knowledge needs to be introduced, generating and outputting, based on the second semantic keyword and the preset-type knowledge base, the second feedback dialogue data corresponding to the second input dialogue data.

9. The method according to claim 8, wherein the third classification result is obtained by inputting the second historical dialogue data, the current dialogue environment data, and the second input dialogue data into a pre-trained binary classification network model; and
the binary classification network model is a model for learning, based on a third sample data set, a capability of determining whether the external knowledge needs to be introduced, and the third sample data set comprises third sample input dialogue data, third sample historical dialogue data, and second sample dialogue environment data corresponding to the third sample input dialogue data.

10. The method according to any one of claims 1 to 9, wherein the second semantic keyword is obtained by inputting the second historical dialogue data, the current dialogue environment data, and the second input dialogue data into a pre-trained generative network model; and
the generative network model is a model for learning, based on a fourth sample data set, a capability of a third sample semantic keyword corresponding to the fourth sample data set, and the fourth sample data set comprises fourth sample input dialogue data, fourth sample historical dialogue data, and third sample dialogue environment data corresponding to the fourth sample input dialogue data.

11. A dialogue network model training method, wherein the method comprises:
obtaining a second sample data set, wherein the second sample data set comprises second sample input dialogue data input by a user, second sample historical dialogue data, and first sample dialogue environment data corresponding to the second sample input dialogue data;
generating a second sample semantic keyword based on the second sample data set; and
obtaining, through training based on the second sample semantic keyword and a preset-type knowledge base, a dialogue network model that has a capability of predicting feedback dialogue data corresponding to input dialogue data, wherein the preset-type knowledge base comprises a knowledge graph, text knowledge, and external knowledge other than the knowledge graph and the text knowledge.

12. The method according to claim 11, wherein the obtaining, through training based on the second sample semantic keyword and a preset-type knowledge base, a dialogue network model that has a capability of predicting feedback dialogue data corresponding to input dialogue data comprises:
separately obtaining, from the external knowledge, the knowledge graph, and the text knowledge, knowledge corresponding to the second sample semantic keyword; and
obtaining the dialogue network model through training based on the obtained knowledge corresponding to the second sample semantic keyword.

13. The method according to claim 12, wherein after the separately obtaining, from the external knowledge, the knowledge graph, and the text knowledge, knowledge corresponding to the second sample semantic keyword, the method further comprises:
retrieving, from at least one of other types of knowledge based on knowledge that is obtained from first-type knowledge and that corresponds to the second sample semantic keyword, knowledge associated with the knowledge that is obtained from the first-type knowledge and that corresponds to the second sample semantic keyword, wherein
the knowledge that is in the at least one of other types of knowledge and that corresponds to the second sample semantic keyword comprises the retrieved knowledge associated with the knowledge that is obtained from the first-type knowledge and that corresponds to the second sample semantic keyword; the first-type knowledge is any one of the external knowledge, the knowledge graph, and the text knowledge; and the at least one of other types of knowledge is type knowledge other than the first-type knowledge in the external knowledge, the knowledge graph, and the text knowledge.

14. The method according to claim 12, wherein the obtaining the dialogue network model through training based on the obtained knowledge corresponding to the second sample semantic keyword comprises:
separately encoding the obtained knowledge corresponding to the second sample semantic keyword, to obtain corresponding feature vectors; and
obtaining the dialogue network model through training based on the corresponding feature vectors.

15. The method according to claim 14, wherein the obtaining the dialogue network model through training based on the corresponding feature vectors comprises:
fusing the corresponding feature vectors to obtain a fusion feature vector;
inputting the fusion feature vector into a fourth neural network model, to output second predicted dialogue data fed back to the user; and
adjusting a parameter of the fourth neural network model based on the second predicted dialogue data fed back to the user and second pre-annotated dialogue data fed back to the user, to obtain the dialogue network model.

16. The method according to claim 15, wherein the fusion feature vector is obtained by inputting the corresponding feature vectors into a cross-attention network model obtained through pre-training.

17. The method according to any one of claims 12 to 16, wherein the obtaining the dialogue network model through training based on the obtained knowledge corresponding to the second sample semantic keyword comprises:
performing redundancy removal on the obtained knowledge corresponding to the second sample semantic keyword, to obtain knowledge after redundancy removal; and
obtaining the dialogue network model through training based on the knowledge obtained after redundancy removal.

18. The method according to any one of claims 11 to 16, wherein the method further comprises:
determining, based on the second sample data set, a first classification result indicating whether the external knowledge needs to be introduced; and
the obtaining, through training based on the second sample semantic keyword and a preset-type knowledge base, a dialogue network model that has a capability of predicting feedback dialogue data corresponding to input dialogue data comprises: if the first classification result indicates that the external knowledge needs to be introduced, obtaining the dialogue network model through training based on the second sample semantic keyword and the preset-type knowledge base.

19. The method according to claim 18, wherein the first classification result is obtained by inputting the second sample data set into a pre-trained binary classification network model; and
the binary classification network model is a model for learning, based on a third sample data set, a capability of determining whether the external knowledge needs to be introduced, and the third sample data set comprises third sample input dialogue data, third sample historical dialogue data, and second sample dialogue environment data corresponding to the third sample input dialogue data.

20. The method according to any one of claims 11 to 19, wherein the second sample semantic keyword is obtained by inputting the second sample data set into a pre-trained generative network model; and
the generative network model is a model for learning, based on a fourth sample data set, a capability of a third sample semantic keyword corresponding to the fourth sample data set, and the fourth sample data set comprises fourth sample input dialogue data, fourth sample historical dialogue data, and third sample dialogue environment data corresponding to the fourth sample input dialogue data.

21. A human-computer dialogue apparatus, wherein the apparatus comprises:
a first obtaining unit, configured to obtain second historical dialogue data, current dialogue environment data, and second input dialogue data input by a user;
a first determining unit, configured to determine a second semantic keyword based on the second historical dialogue data, the current dialogue environment data, and the second input dialogue data;
a first generation unit, configured to generate, based on the second semantic keyword and a preset-type knowledge base, second feedback dialogue data corresponding to the second input dialogue data, wherein the preset-type knowledge base comprises a knowledge graph, text knowledge, and external knowledge other than the knowledge graph and the text knowledge; and
an output unit, configured to output the second feedback dialogue data.

22. A dialogue network model training apparatus, wherein the apparatus comprises:
a second obtaining unit, configured to obtain a second sample data set, wherein the second sample data set comprises second sample input dialogue data input by a user, second sample historical dialogue data, and first sample dialogue environment data corresponding to the second sample input dialogue data;
a second generation unit, configured to generate a second sample semantic keyword based on the second sample data set; and
a training unit, configured to obtain, through training based on the second sample semantic keyword and a preset-type knowledge base, a dialogue network model that has a capability of predicting feedback dialogue data corresponding to input dialogue data, wherein the preset-type knowledge base comprises a knowledge graph, text knowledge, and external knowledge other than the knowledge graph and the text knowledge.

23. A computer storage medium, wherein the computer storage medium stores computer instructions, and when the computer instructions are run by a processor, the method according to any one of claims 1 to 10 is performed, or the method according to any one of claims 11 to 20 is performed.

24. An electronic device, comprising:
at least one processor; and
a memory in communication connection with the at least one processor, wherein
the memory stores computer instructions that can be executed by the at least one processor, and the computer instructions are executed by the at least one processor, so that the method according to any one of claims 1 to 10 is performed, or the method according to any one of claims 11 to 20 is performed.

25. A computer program product, wherein when the computer program product runs on a processor, the method according to any one of claims 1 to 10 is performed, or the method according to any one of claims 11 to 20 is performed.

26. A chip, comprising:
an input interface, configured to obtain second historical dialogue data, current dialogue environment data, and second input dialogue data input by a user;
a logic circuit, configured to perform the method according to any one of claims 1 to 10, to obtain second feedback dialogue data corresponding to the second input dialogue data; and
an output interface, configured to output the second feedback dialogue data.

27. A terminal device, comprising:
a data collection apparatus, configured to obtain second historical dialogue data, current dialogue environment data, and second input dialogue data input by a user; and
a dialogue system, configured to: determine a second semantic keyword based on the second historical dialogue data, the current dialogue environment data, and the second input dialogue data; and generate and output, based on the second semantic keyword and a preset-type knowledge base, second feedback dialogue data corresponding to the second input dialogue data, wherein the preset-type knowledge base comprises a knowledge graph, text knowledge, and external knowledge other than the knowledge graph and the text knowledge.
